# EUROPEAN PATENT APPLICATION

(11) **EP 4 675 777 A1**
(43) Date of publication of application: **07.01.2026**
(21) Application number: 24883780.9
(22) Date of filing: 28.03.2024
(51) Int. Cl.: H01M 50/119, H01M 50/133, H01M 50/131, H01M 50/103, H01M 10/052, H01M 10/054

(54) **BATTERY CELL, BATTERY, AND ELECTRIC DEVICE**

(30) Priority: 02.11.2023 CN 202322955803 U
(71) Applicant: Contemporary Amperex Technology Co., Ltd., Ningde, Fujian 352100 (CN)
(72) Inventor: CHEN, Long, Ningde, Fujian 352100 (CN); CHEN, Xinxiang, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/084552
(87) International publication number: WO 2025/091765

(57) **Abstract**

The present application is applicable to the technical field of batteries (100), and provides a battery cell (10), a battery (100), and an electric device. The electric device comprises the battery cell (10) and the battery (100), wherein the battery (100) comprises battery cells (10), and the battery cells (10) each comprise a casing (12) and an electrode assembly (11). At least part of the casing (12) is a steel casing, and the casing (12) comprises a body (121) and a bottom (122). The bottom (122) is formed at one end of the body (121) in a first direction (Z), and is separated from or integrated with the body (121). At least part of the body (121) is welded. At least part of the electrode assembly (11) is provided in a space defined by the body (121) and the bottom (122). Therefore, the wall thickness of the casing (12) can be reduced while the structural strength of the battery cell (10) is relatively high, thereby reducing the proportion of the casing (12) in the battery cell (10), and achieving high energy density of the battery cell (10).

## Description

### CROSS-REFERENCE

The present application claims priority to Chinese Patent Application No. 202322955803.X filed with China National Intellectual Property Administration on November 2, 2023 and entitled "BATTERY CELL, BATTERY, AND ELECTRIC DEVICE", which is incorporated herein by reference in its entirety.

### TECHNICAL FIELD

The present application relates to the technical field of batteries, and in particular, to a battery cell, a battery, and an electric device.

### BACKGROUND

In the related art, the battery cell may generally include a housing, an electrode assembly, and an end cover. The electrode assembly is arranged in the internal environment defined by the housing and the end cover.

In some cases, in order to enable the entire battery cell to have great structural strength, the housing is generally provided with a great wall thickness. In this way, the housing occupies a large proportion of the battery cell, such that the energy density of the battery cell is limited to a certain extent.

### SUMMARY

In view of the above problem, an objective of embodiments of the present application is to provide a battery cell, a battery, and an electric device, which can alleviate the technical problem of the limited energy density of the battery cell.

In a first aspect, the embodiments of the present application provide a battery cell. The battery cell includes:
a housing, at least part of the housing being a steel housing, where the housing includes a housing body and a housing bottom, and the housing bottom is arranged at an end of the housing body in a first direction, and is separably connected or integrally connected to the housing body; and
an electrode assembly, at least part of the electrode assembly being arranged in a space enclosed by the housing body and the housing bottom, where
the housing body includes a first side wall and a second side wall oppositely arranged in a second direction, and a third side wall and a fourth side wall oppositely arranged in a third direction; the first side wall, the third side wall, the second side wall, and the fourth side wall are sequentially connected in a bending manner, and an end of the fourth side wall distal to the second side wall is connected to the first side wall; the housing bottom is arranged at ends of the first side wall, the second side wall, the third side wall, and the fourth side wall in the first direction; the first direction, the second direction, and the third direction are arranged to intersect with each other,
where the first side wall includes a first sub-wall and a second sub-wall sequentially arranged in the third direction, and the first sub-wall is welded to the second sub-wall;
and/or the second side wall includes a third sub-wall and a fourth sub-wall sequentially arranged in the third direction, and the third sub-wall is welded to the fourth sub-wall;
and/or the third side wall includes a fifth sub-wall and a sixth sub-wall sequentially arranged in the second direction, and the fifth sub-wall is welded to the sixth sub-wall;
and/or the fourth side wall includes a seventh sub-wall and an eighth sub-wall sequentially arranged in the second direction, and the seventh sub-wall is welded to the eighth sub-wall;
and/or the first side wall is welded to the third side wall;
and/or the first side wall is welded to the fourth side wall;
and/or the second side wall is welded to the third side wall;
and/or the second side wall is welded to the fourth side wall.

In the battery cell according to the embodiments of the present application, by configuring at least part of the housing as a steel housing; that is, by selecting steel as the material of the at least part of the housing, the housing is enabled to have great structural strength. In addition, the housing includes a housing body and a housing bottom, and at least part of the housing body is welded. Therefore, on the basis of enabling the entire battery cell to have great structural strength, the wall thickness of the housing can be greatly reduced, thereby reducing the proportion of the housing in the battery cell, and enabling the battery cell to have a high energy density.

In some embodiments, the wall thickness of at least part of the housing is less than or equal to 0.2 mm.

Due to such an arrangement, on the basis of enabling the housing to have great structural strength, the wall thickness of at least part of the housing is small, which can reduce the proportion of the housing in the battery cell, thereby enabling the battery cell to have a high energy density.

In some embodiments, the wall thickness of at least part of the housing is less than or equal to 0.075mm.

Due to such an arrangement, on the basis of enabling the housing to have great structural strength, the wall thickness of at least part of the housing is very small, which can greatly reduce the proportion of the housing in the battery cell, thereby enabling the battery cell to have a high energy density.

In some embodiments, the peripheral edge of the end of the housing body facing the housing bottom in the first direction is welded to the housing bottom.

The housing bottom is welded to the peripheral edge of the end of the housing body facing the housing bottom in the first direction, such that the housing bottom and the housing body are integrally connected by welding. Due to such an arrangement, the formation of the housing is facilitated.

In some embodiments, the first side wall is welded to the third side wall, and the third side wall, the second side wall, the fourth side wall, and the first side wall are integrally connected in sequence.

Alternatively, the first side wall includes the first sub-wall and the second sub-wall sequentially arranged in the third direction and welded, and the first sub-wall, the third side wall, the second side wall, the fourth side wall, and the second sub-wall are integrally connected in sequence.

By adopting the above technical solutions, a plurality of bends are integrally formed, and then one welding operation is performed to obtain the housing body. In this way, the forming process of the housing body is very simple and easy to implement.

In some embodiments, the wall area of the first side wall is less than the wall area of the third side wall.

By arranging the wall area of the first side wall to be less than the wall area of the third side wall, the third side wall is a large surface of the battery cell relative to the first side wall.

In some embodiments, the first side wall includes the first sub-wall and the second sub-wall sequentially arranged in the third direction and welded, the second side wall includes the third sub-wall and the fourth sub-wall sequentially arranged in the third direction and welded, the first sub-wall, the third side wall, and the third sub-wall are integrally connected in sequence, and the fourth sub-wall, the fourth side wall, and the second sub-wall are sequentially connected;
or, the third side wall is welded to the first side wall and the second side wall separately, and the first side wall, the fourth side wall, and the second side wall are integrally connected in sequence;
or, the first side wall is welded to the third side wall, the second side wall is welded to the fourth side wall, the first side wall is integrally connected to the fourth side wall, and the second side wall is integrally connected to the third side wall.

By providing two integrally formed components and then performing two welding operations on the two components, the housing body can be obtained. In this way, the forming process of the housing body is very simple and easy to implement.

In some embodiments, the first side wall, the third side wall, the second side wall, and the fourth side wall are sequentially welded, and the end of the fourth side wall distal to the second side wall is welded to the first side wall.

By adopting the above technical solutions, the first side wall, the second side wall, the third side wall, and the fourth side wall can be formed into the housing body by four welding operations. In this way, the forming process of the housing body is very simple and easy to implement.

In some embodiments, the battery cell further includes an end cover arranged on the housing, and the electrode assembly is accommodated in a space enclosed by the housing and the end cover.

Due to such an arrangement, the end cover and the housing can form an internal environment of the battery cell.

In a second aspect, the embodiments of the present application provide a battery. The battery includes a battery cell.

By adopting the battery cell referred to above, the battery according to the embodiments of the present application can reduce the proportion of the housing in the battery cell, thereby enabling the battery cell to have a high energy density and increasing the energy density of the battery.

In a third aspect, the embodiments of the present application provide an electric device. The electric device includes a battery cell or a battery.

By adopting the battery cell or the battery referred to above, the electric device according to the embodiments of the present application can increase the energy density of the battery.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application, the drawings required for illustrating the embodiments or description of the prior art are briefly described below. Apparently, the drawings in the following description illustrate merely some embodiments of the present application, and those of ordinary skill in the art may still derive other drawings from these drawings without creative efforts.
FIG. 1 is a schematic diagram of a vehicle according to some embodiments of the present application;
FIG. 2 is a schematic exploded view of a battery according to some embodiments of the present application;
FIG. 3 is a schematic exploded view of a battery cell according to some embodiments of the present application;
FIG. 4 is a first schematic exploded view of a housing of a battery cell according to some embodiments of the present application;
FIG. 5 is a second schematic exploded view of a housing of a battery cell according to some embodiments of the present application;
FIG. 6 is a third schematic exploded view of a housing of a battery cell according to some embodiments of the present application;
FIG. 7 is a fourth schematic exploded view of a housing of a battery cell according to some embodiments of the present application;
FIG. 8 is a fifth schematic exploded view of a housing of a battery cell according to some embodiments of the present application;
FIG. 9 is a sixth schematic exploded view of a housing of a battery cell according to some embodiments of the present application;
FIG. 10 is a seventh schematic exploded view of a housing of a battery cell according to some embodiments of the present application; and
FIG. 11 is an eighth schematic exploded view of a housing of a battery cell according to some embodiments of the present application.

Reference numerals in the drawings have the following meanings:
1000-vehicle; 100-battery; 200-controller; 300-motor; 10-battery cell; 20-case; 201-accommodating space; 21-first part; 22-second part; 11-electrode assembly; 12-housing; 121-housing body; 1211-first side wall; 12111-first sub-wall; 12112-second sub-wall; 1212-second side wall; 12121-third sub-wall; 12122-fourth sub-wall; 1213-third side wall; 12131-fifth sub-wall; 12132-sixth sub-wall; 1214-fourth side wall; 12141-seventh sub-wall; 12142-eighth sub-wall; 122-housing bottom; 13-end cover; a-first welding bead; b-second welding bead; c-third welding bead; d-fourth welding bead; e-fifth welding bead; f-sixth welding bead; g-seventh welding bead; h-eighth welding bead; Z-first direction; Y-second direction; and X-third direction.

### DETAILED DESCRIPTION

Embodiments of the present application are described in detail hereinafter, with examples of the embodiments illustrated in the drawings. Throughout the drawings, the same or similar reference numbers indicate the same or similar elements or elements having the same or similar functions. The embodiments described hereinafter with reference to the drawings are exemplary and are intended to explain the present application. They should not be construed as limiting the present application.

In the description of the present application, it should be understood that the orientations or positional relationships indicated by the terms "length", "width", "upper", "lower", "front", "rear", "left", "right", "vertical", "horizontal", "top", "bottom", "inner", "outer", and the like are those shown based on the drawing. These terms are only intended to facilitate the description of the present application and simplify the description rather than indicate or imply that the device or element referred to must have a specific orientation or must be constructed and operated in a specific orientation, and thus, should not be construed as limiting the present application.

In addition, the terms "first" and "second" are used for description only and are not to be construed as indicating or implying relative importance or to implicitly indicate the number of technical features indicated. Therefore, a feature defined with "first" or "second" may explicitly or implicitly include one or more such features.

In the description of the present application, "plurality of" means two or more, including two, unless otherwise explicitly and specifically defined. Correspondingly, "plurality of groups" means two or more groups, including two groups.

In the description of the present application, unless otherwise clearly specified and defined, the terms "mount", "interconnect", "connect", "fix", and the like should be interpreted in their broad senses. For example, they may be fixed connection, detachable connection, or integral connection; mechanical connection or electrical connection; or direct connection, indirect connection via an intermediate, a communication between interiors of two elements, or an interaction between two elements. For those of ordinary skill in the art, the specific meanings of the aforementioned terms in the present application can be understood according to specific conditions.

In the description of the present application, the term "and/or" is merely a way to describe the associative relationship between associated objects, indicating that there are three possible relationships. For example, "A and/or B" may denote: the presence of A alone, the presence of both A and B, and the presence of B alone. In addition, in the present application, the character "/" generally indicates an "or" relationship between the associated objects before and after the "/".

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

In the related art, the battery cell may generally include a housing, an electrode assembly, and an end cover. The electrode assembly is arranged in the internal environment defined by the housing and the end cover.

In some cases, in order to enable the entire battery cell to have great structural strength, the housing is generally provided with a great wall thickness. In this way, the housing occupies a large proportion of the battery cell, such that the energy density of the battery cell is limited to a certain extent.

Based on the above consideration, the embodiments of the present application provide a battery cell, a battery, and an electric device. By configuring at least part of the housing as a steel housing; that is, by selecting steel as the material of the at least part of the housing, the housing is enabled to have great structural strength. In addition, the housing includes a housing body and a housing bottom, and at least part of the housing body is welded. Therefore, on the basis of enabling the entire battery cell to have great structural strength, the wall thickness of the housing can be greatly reduced, thereby reducing the proportion of the housing in the battery cell, and enabling the battery cell to have a high energy density.

In some embodiments, the battery cell and the battery referred to in the embodiments of the present application may be used in an electric device that uses a battery cell or a battery as a power source.

The electric device referred to in the embodiments of the present application may be, but is not limited to, a mobile phone, a tablet, a laptop computer, an electric toy, an electric tool, an electric bicycle, a vehicle, a ship, a spacecraft, and the like. The electric toy may include a stationary or mobile electric toy, such as a game console, an electric vehicle toy, an electric ship toy, and an electric airplane toy. The spacecraft may include an airplane, a rocket, a space shuttle, a spaceship, and the like. The vehicle may be classified by power source as a fuel vehicle, a gas vehicle, or a new energy vehicle. The new energy vehicle may be a pure electric vehicle, a hybrid vehicle, an extended-range vehicle, or the like. The vehicle may be classified by drive mode as a front-wheel drive vehicle, a rear-wheel drive vehicle, or a four-wheel drive vehicle.

In some other embodiments, the battery cell and the battery referred to in the embodiments of the present application may also be used in an energy storage device. The energy storage device may be an energy storage container, an energy storage electrical cabinet, or the like.

The battery referred to in the embodiments of the present application may be a single physical module including one or more battery cells to provide a higher voltage and capacity. When there are a plurality of battery cells, the plurality of battery cells are connected in series, in parallel, or in series-parallel by a busbar component. The series-parallel connection means that both series connection and parallel connection are present for the connection among the plurality of battery cells.

In some embodiments, the battery may be a battery module. When there are a plurality of battery cells, the plurality of battery cells are arranged and fixed to form a battery module. As an example, the plurality of battery cells may be fixed by a cable tie or the like to form a battery module. As an example, the plurality of battery cells may also be fixed by an end plate, a side plate, or the like to form a battery module.

In some other embodiments, the battery may be a battery pack, which may include a case and battery cells. As an example, the battery cells may be accommodated directly in the case. As an example, the battery cells may also be formed into a battery module before being accommodated in the case.

The battery cell referred to in the embodiments of the present application refers to the smallest unit that stores and outputs electric energy. The battery cell may be a secondary battery or a primary battery. The battery cell may be, but is not limited to, a metal battery, a lithium sulfur battery, a sodium-ion battery, or a magnesium-ion battery. The battery cell may be cylindrical, flat, rectangular parallelepiped, or in other shapes.

For ease of description, in the embodiments of the present application, the description is provided by taking a vehicle as an example of the electric device.

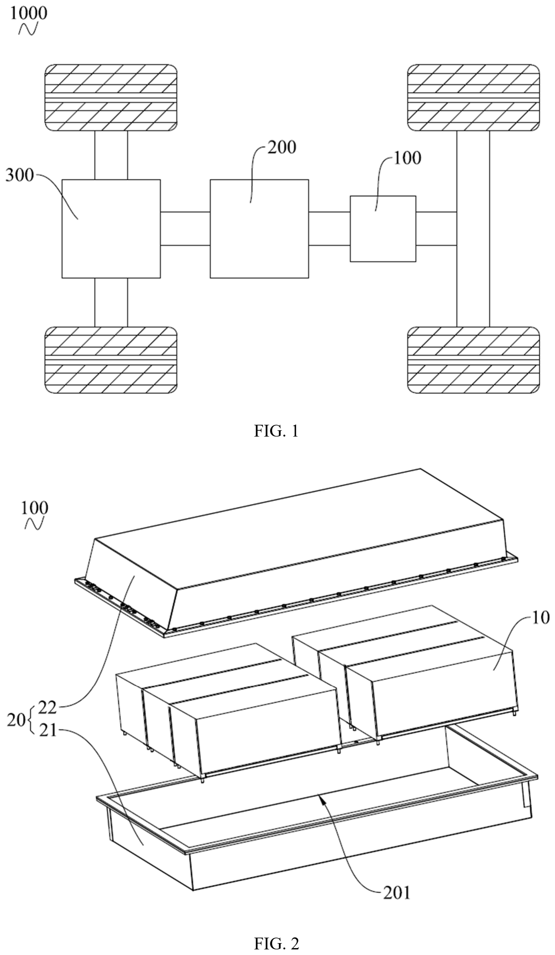

In some embodiments, referring to FIG. 1, FIG. 1 is a schematic diagram of a vehicle 1000 according to some embodiments of the present application. A battery 100 described above is provided inside the vehicle 1000, and the battery 100 may be arranged at the bottom, the head, or the tail of the vehicle 1000. The battery 100 may be configured to power the vehicle 1000. For example, the battery 100 may serve as an operation power source of the vehicle 1000. The vehicle 1000 may further include a controller 200 and a motor 300. The controller 200 is configured to control the battery 100 to power the motor 300, e.g., for operation power needed by the vehicle 1000 for start-up, navigation, and driving.

In some embodiments, the battery 100 may not only serve as an operation power source for the vehicle 1000, but also as a driving power source for the vehicle 1000 to, instead of or in part instead of fuel or natural gas, provide driving power for the vehicle 1000.

In some embodiments, referring to FIG. 2, FIG. 2 is an exploded view of a battery 100 according to some embodiments of the present application. The battery 100 includes a case 20 and a plurality of battery cells 10. The case 20 is a structure having an accommodating space 201 therein, and the case 20 may be of various structures. In some embodiments, the case 20 may include a first part 21 and a second part 22. The first part 21 and the second part 22 are mutually lidded with each other, and jointly define the above accommodating space 201.

Referring to FIG. 2, the first part 21 may be a hollow structure with an end open, and the second part 22 is a plate-like structure. The second part 22 lids the open side of the first part 21, such that the first part 21 and the second part 22 jointly define the above accommodating space 201. Alternatively, the first part 21 and the second part 22 may each be a hollow structure with an end open, and the open side of the first part 21 lids the open side of the second part 22, such that the first part 21 and the second part 22 jointly define the above accommodating space 201.

The case 20 formed by the first part 21 and the second part 22 may be in various shapes, such as cylindrical and rectangular parallelepiped.

In some embodiments, referring to FIG. 2, the plurality of battery cells 10 may be connected in series, in parallel, or in series-parallel as an integrated unit, and then the integrated unit formed by the plurality of battery cells 10 is directly accommodated in the above accommodating space 201 of the case 20. In some other embodiments, the plurality of battery cells 10 may also be first connected in series, in parallel, or in series-parallel and then arranged and fixed to form a battery module, and then the battery module is accommodated in the above accommodating space 201 of the case 20. In still some other embodiments, a plurality of battery modules may also be first connected in series, in parallel, or in series-parallel and then arranged and fixed to form a plurality of battery modules, the plurality of battery modules are then connected in series, in parallel, or in series-parallel to form an integrated unit, and then the integrated unit is accommodated in the above accommodating space 201 of the case 20.

In some embodiments, the case 20 of the battery 100 may be a part of the chassis structure of the vehicle 1000. For example, a part of the case 20 may be at least a part of the chassis of the vehicle 1000, or a part of the case 20 may be at least a part of a transverse beam and a longitudinal beam of the vehicle 1000.

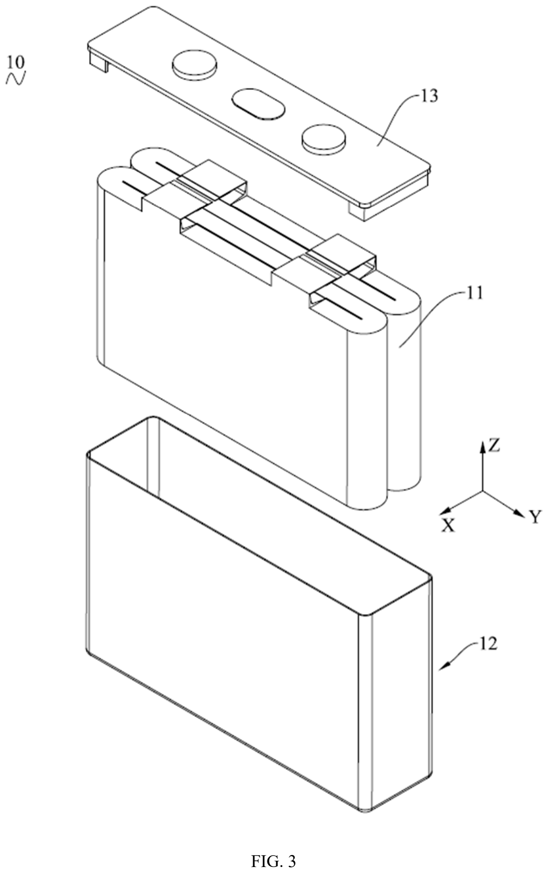

In some embodiments, referring to FIG. 3, FIG. 3 is an exploded view of a battery cell 10 according to some embodiments of the present application. The battery cell 10 may include an electrode assembly 11 and a shell.

The electrode assembly 11 is a component where the electrochemical reaction occurs in the battery cell 10. The electrode assembly 11 is mainly formed by winding or stacking a positive electrode plate and a negative electrode plate, and a separator is provided between the positive electrode plate and the negative electrode plate. The portions of the positive electrode plate and the negative electrode plate that contain active substances form the main body part of the electrode assembly 11, and the portions of the positive electrode plate and the negative electrode plate that do not contain active substances each form a tab. The tab of the positive electrode plate is a positive tab and the tab of the negative electrode plate is a negative tab. The positive electrode tab and the negative electrode tab may be located together at one end of the main body part or respectively at two opposite ends of the main body part.

In the battery cell 10, there may be one or more electrode assemblies 11.

In some cases, the electrode assembly 11 may also be referred to as a bare cell, a wound body, a stacked body, etc.

In some embodiments, the battery cell 10 may further include an electrolyte that conducts ions between the positive electrode plate and the negative electrode plate. The electrolyte referred to in the embodiments of the present application may be liquid, gel, or solid.

In some embodiments, still referring to FIG. 3, the shell includes a housing 12 and an end cover 13. The housing 12 and the end cover 13 are components for jointly defining the internal environment of the battery cell 10. The internal environment defined by the housing 12 and the end cover 13 is used for accommodating the electrode assembly 11 and the electrolyte. The housing 12 and the end cover 13 may be separate components. Specifically, the housing 12 is provided with an opening, and the end cover 13 lids the opening of the housing 12 to define the internal environment of the battery cell 10 together with the housing 12 and to isolate the internal environment of the battery cell 10 from the external environment. Alternatively, the housing 12 and the end cover 13 may also be of an integrated structure. Specifically, a common connection surface may be formed between the end cover 13 and the housing 12 before the electrode assembly 11 is placed into the housing, and after the electrode assembly 11 is placed into the housing, the end cover 13 lids the housing 12 when the electrode assembly 11 needs to be encapsulated.

As shown in FIG. 3, there may be one end cover 13. Alternatively, there may also be two end covers 13, and the two end covers 13 are respectively arranged at two opposite ends of the housing 12.

The housing 12 may be cylindrical, square, etc., which may be specifically determined depending on the specific shape and size of the electrode assembly 11.

Still referring to FIG. 3 and other drawings, the battery 100 cell according to the embodiments of the present application includes a housing 12 and an electrode assembly 11. At least part of the housing 12 is a steel housing. At least part of the electrode assembly 11 is arranged in the housing 12.

At least part of the housing 12 being a steel housing means that the housing 12 is a steel housing; that is, the housing 12 is made of steel. Alternatively, one part of the housing 12 is a steel housing, and the other part of the housing is a housing made of another material; that is, one part of the housing 12 is made of steel, and the other part of the housing may be made of at least one of copper, iron, aluminum, an aluminum alloy, and the like.

As an example, the housing 12 is a steel housing made of at least one of steels such as 304 stainless steel (SUS304), 316 stainless steel (SUS316), and SPCC.

At least part of the electrode assembly 11 being arranged in the housing 12 may mean that one part of the electrode assembly 11 may be accommodated in the housing 12, and the other part may be located outside the housing 12, or the electrode assembly 11 may be completely accommodated in the housing 12.

In the battery 100 cell according to the embodiments of the present application, by configuring at least part of the housing 12 as a steel housing; that is, by selecting steel as the material of the at least part of the housing 12, the housing 12 is enabled to have great structural strength. Therefore, on the basis of enabling the entire battery 100 cell to have great structural strength, the wall thickness of the housing 12 can be greatly reduced, thereby reducing the proportion of the housing 12 in the battery 100 cell, and enabling the battery 100 cell to have a high energy density.

In addition, the melting point of steel is high, thereby enabling the housing 12 to have a high melting point. In this way, in the battery 100, when a battery 100 cell is experiencing thermal runaway, the housing 12, with its high melting point, can slow down the propagation of thermal runaway from the battery 100 cell to the adjacent battery 100 cell, that is, can mitigate the problem of thermal runaway of the adjacent battery 100 cell caused by the melting of the housing 12, thereby effectively reducing the risk of chain reaction of thermal runaway of the battery 100, and enabling the battery 100 to have high reliability.

In some embodiments, the melting point of the housing 12 is greater than 1000 °C and less than 2500 °C at standard atmospheric pressure. For example, the melting point of the housing 12 may be 1100 °C, 1200 °C, 1300 °C, 1400 °C, 1500 °C, 1600 °C, 1700 °C, 1800 °C, 1900 °C, etc.

In this way, the housing 12 is enabled to have a high melting point.

In some embodiments, the wall thickness of at least part of the housing 12 is less than or equal to 0.2 mm.

It can be understood that the overall wall thickness of the housing 12 is less than or equal to 0.2 mm. Alternatively, the wall thickness of a part of the housing 12 is less than or equal to 0.2 mm.

For example, the wall thickness of at least part of the housing 12 may be 0.19 mm, 0.18 mm, 0.17 mm, 0.16 mm, 0.15 mm, 0.14 mm, 0.13 mm, 0.12 mm, 0.11 mm, 0.1 mm, 0.095 mm, 0.09 mm, 0.085 mm, 0.08 mm, 0.075 mm, 0.07 mm, 0.065 mm, 0.06 mm, 0.05 mm, etc.

Due to such an arrangement, on the basis of enabling the housing 12 to have great structural strength, the wall thickness of at least part of the housing 12 is small, which can reduce the proportion of the housing 12 in the battery 100 cell, thereby enabling the battery 100 cell to have a high energy density.

In some embodiments, the wall thickness of at least part of the housing 12 is less than or equal to 0.075mm.

It can be understood that the overall wall thickness of the housing 12 is less than or equal to 0.075mm. Alternatively, the wall thickness of a part of the housing 12 is less than or equal to 0.075mm.

For example, the wall thickness of at least part of the housing 12 may be 0.075 mm, 0.072 mm, 0.07 mm, 0.068 mm, 0.065 mm, 0.062 mm, 0.06 mm, 0.058 mm, 0.055 mm, 0.05 mm, etc.

Due to such an arrangement, on the basis of enabling the housing 12 to have great structural strength, the wall thickness of at least part of the housing 12 is very small, which can greatly reduce the proportion of the housing 12 in the battery 100 cell, thereby enabling the battery 100 cell to have a high energy density.

It should be noted herein that at least part of the housing 12 may be at least one of a housing bottom 122, a first side wall 1211, a second side wall 1212, a third side wall 1213, and a fourth side wall 1214 referred to below. The wall thickness of the housing bottom 122 is the dimension of the housing bottom 122 in a first direction Z, the wall thickness of the first side wall 1211 is the dimension of the first side wall 1211 in a second direction Y, the wall thickness of the second side wall 1212 is the dimension of the second side wall 1212 in the second direction Y, the wall thickness of the third side wall 1213 is the dimension of the third side wall 1213 in a third direction X, and the wall thickness of the fourth side wall 1214 is the dimension of the fourth side wall 1214 in the third direction X.

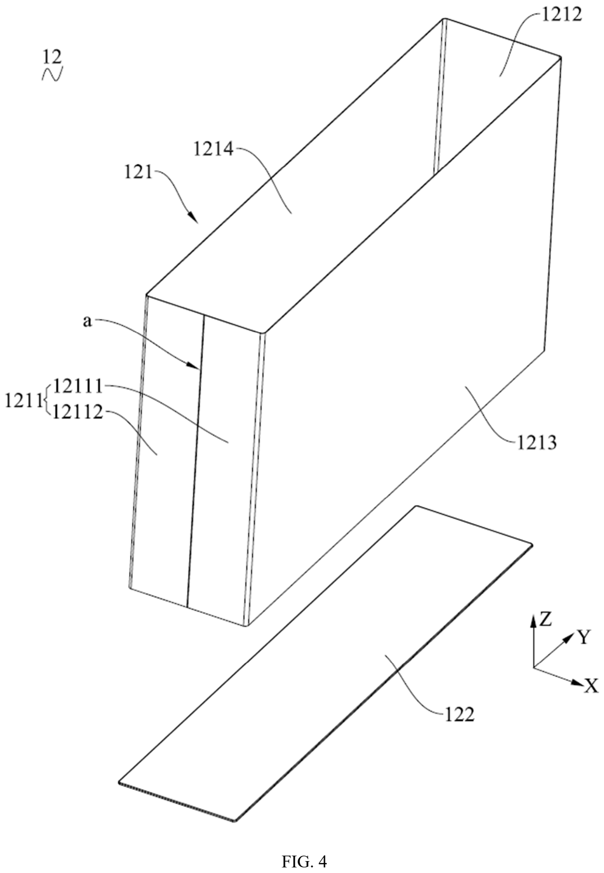

In some embodiments, referring to FIGs. 4 to 10 together and other drawings, FIGs. 4 to 10 are exploded views of a housing 12 of a battery 100 cell according to eight embodiments of the present application. The housing 12 includes a housing body 121 and a housing bottom 122. The housing bottom 122 is arranged at one end of the housing body 121 in the first direction Z. As shown in FIGs. 4 to 10, the housing bottom 122 is separably connected to the housing body 121, or the housing bottom 122 is integrally connected to the housing body 121. At least part of the electrode assembly 11 is arranged in a space enclosed by the housing body 121 and the housing bottom 122.

At least part of the housing 12 being a steel housing may mean that at least part of the housing body 121 is a steel housing, or at least part of the housing bottom 122 is a steel housing, or both at least part of the housing bottom 122 and at least part of the housing body 121 are steel housings. As an example, the housing body 121 and the housing bottom 122 of the housing 12 are both steel housings; that is, the entire housing 12 is configured to be a steel housing.

The housing body 121 and the housing 12 are two parts of the housing 12. As shown in FIGs. 4 to 10, the housing body 121 is provided in a penetrating manner in the first direction Z, and the housing bottom 122 is arranged at an end of the housing body 121 in the first direction Z, so as to close the opening at one end of the housing body 121 in the first direction Z.

The first direction Z is parallel to the Z-axis shown in FIGs. 4 to 10. The first direction Z may be the height direction or the length direction of the battery 100 cell.

The housing bottom 122 and the housing body 121 may be separably connected by welding, bonding, or the like.

The housing bottom 122 and the housing body 121 may be integrally connected by integrated die casting, stamping, or the like.

The housing body 121 and the housing body 121 are separably connected or integrally connected, such that the housing 12 may be a separably connected structure or an integrally connected structure. The forming process of the housing 12 is highly flexible, offers a high degree of optionality, and is easy to implement.

In some embodiments, referring to FIGs. 4 to 10 together and other drawings, the peripheral edge of the end of the housing body 121 facing the housing bottom 122 in the first direction Z is welded to the housing bottom 122.

Specifically, the peripheral edge of the end of the housing body 121 facing the housing bottom 122 in the first direction Z is correspondingly welded to the peripheral edge of the housing body 12. The peripheral edge of the end of the housing body 121 facing the housing bottom 122 in the first direction Z refers to the peripheral edge of the end of the housing body 121 facing the housing bottom 122 in the first direction Z that surrounds the first direction Z. Correspondingly, the peripheral edge of the housing bottom 122 refers to the peripheral edge of the housing bottom 122 that surrounds the first direction Z.

The housing bottom 122 is welded to the peripheral edge of the end of the housing body 121 facing the housing bottom 122 in the first direction Z, such that the housing bottom 122 and the housing body 121 are integrally connected by welding. Due to such an arrangement, the formation of the housing 12 is facilitated.

It should be further noted herein that when the dimension of the housing 12 in the first direction Z is large, forming the housing 12 by integrated die casting, stamping, or the like to enable the housing body 121 to be integrally connected to the housing bottom 122 may lead to problems such as cracking of the housing 12 during formation, thereby making it difficult to form the housing 12. In the battery 100 cell according to the embodiments of the present application, the housing bottom 122 and the housing body 121 are separably connected in a manner that may be, but is not limited to, welding, which facilitates the formation of the housing 12.

In some embodiments, referring to FIGs. 4 to 10 together and other drawings, the housing body 121 includes the first side wall 1211, the second side wall 1212, the third side wall 1213, and the fourth side wall 1214. The first side wall 1211 and the second side wall 1212 are oppositely arranged in the second direction Y, and the third side wall 1213 and the fourth side wall 1214 are oppositely arranged in the third direction X. The first side wall 1211, the third side wall 1213, the second side wall 1212, and the fourth side wall 1214 are sequentially connected in a bending manner, and the end of the fourth side wall 1214 distal to the second side wall 1212 is connected to the first side wall 1211. The housing bottom 122 is arranged at the same end of the first side wall 1211, the second side wall 1212, the third side wall 1213, and the fourth side wall 1214 in the first direction Z. The first direction Z, the second direction Y, and the third direction X are arranged to intersect with each other.

It should be first noted herein that the first direction Z, the second direction Y, and the third direction X being arranged to intersect with each other means that the first direction Z intersects with the second direction Y, the second direction Y intersects with the third direction X, and the first direction Z intersects with the third direction X. The first direction Z intersecting with the second direction Y means that the first direction Z and the second direction Y may have an included angle greater than 0° and less than 180° formed therebetween; that is, the first direction Z is not parallel to the second direction Y. The first direction Z and the second direction Y may be perpendicular or not be perpendicular to each other. The first direction Z and the second direction Y may be directions that intersect with each other in the same plane, or may be directions in non-coplanar planes, respectively, and the projection of the second direction Y on the plane in which the first direction Z is located may intersect with the first direction Z. As an example, the first direction Z is parallel to the Z-axis, the second direction Y is parallel to the Y-axis, and the third direction X is parallel to the X-axis; that is, the first direction Z is perpendicular to the second direction Y, the first direction Z is perpendicular to the third direction X, and the second direction Y is perpendicular to the third direction X. The X-axis, the Y-axis, and the Z-axis are three coordinate axes of the spatial coordinate system, the X-axis is perpendicular to the Y-axis, the X-axis is perpendicular to the Z-axis, and the Y-axis is perpendicular to the Z-axis.

The first side wall 1211, the second side wall 1212, the third side wall 1213, and the fourth side wall 1214 are four solid walls of the housing body 121. At least part of the electrode assembly 11 is arranged in a space enclosed by the first side wall 1211, the second side wall 1212, the third side wall 1213, the fourth side wall 1214, and the housing bottom 122.

As shown in FIGs. 4 to 10, one end of the first side wall 1211 in the third direction X is integrally connected or separably connected to one end of the third side wall 1213 in the second direction Y, an end of the first side wall 1211 distal to the third side wall 1213 in the third direction X is integrally connected or separably connected to one end of the fourth side wall 1214 in the second direction Y, one end of the second side wall 1212 in the third direction X is integrally connected or separably connected to an end of the third side wall 1213 distal to the first side wall 1211 in the second direction Y, and an end of the second side wall 1212 distal to the third side wall 1213 in the third direction X is integrally connected or separably connected to an end of the fourth side wall 1214 distal to the first side wall 1211 in the second direction Y. In this way, the first side wall 1211, the third side wall 1213, the second side wall 1212, and the fourth side wall 1214 are integrally connected or separably connected in sequence. The end of the fourth side wall 1214 distal to the second side wall 1212 is integrally connected or separably connected to the first side wall 1211. The first side wall 1211 and the third side wall 1213 are bent relative to each other. The third side wall 1213 and the second side wall 1212 are bent relative to each other. The second side wall 1212 and the fourth side wall 1214 are bent relative to each other. The fourth side wall 1214 and the first side wall 1211 are bent relative to each other.

Due to such an arrangement, the housing body 121 is substantially cube-shaped; that is, the battery 100 cell is a prismatic battery 100.

Based on this, the housing bottom 122 is also substantially square. The housing bottom 122 being welded to the peripheral edge of the end of the housing body 121 facing the housing bottom 122 in the first direction Z means that four sides of the housing bottom 122 are correspondingly welded to the first side wall 1211, the third side wall 1213, the second side wall 1212, and the fourth side wall 1214, respectively.

It should be noted herein that the integral connection referred to in the embodiments of the present application may be implemented by integrated die casting, stamping, or the like, and the separate connection referred to in the embodiments of the present application may be implemented by welding, bonding, or the like.

In some embodiments, referring to FIGs. 4 to 10 together, at least part of the housing body 121 is welded.

At least part of the housing body 121 being welded means that the forming process of the housing body 121 includes welding. For example, the housing body 121 is composed of a plurality of parts, and at least two parts are fixed by welding.

Due to such an arrangement, the forming process of the housing body 121 is highly flexible, offers a high degree of optionality, and is easy to implement.

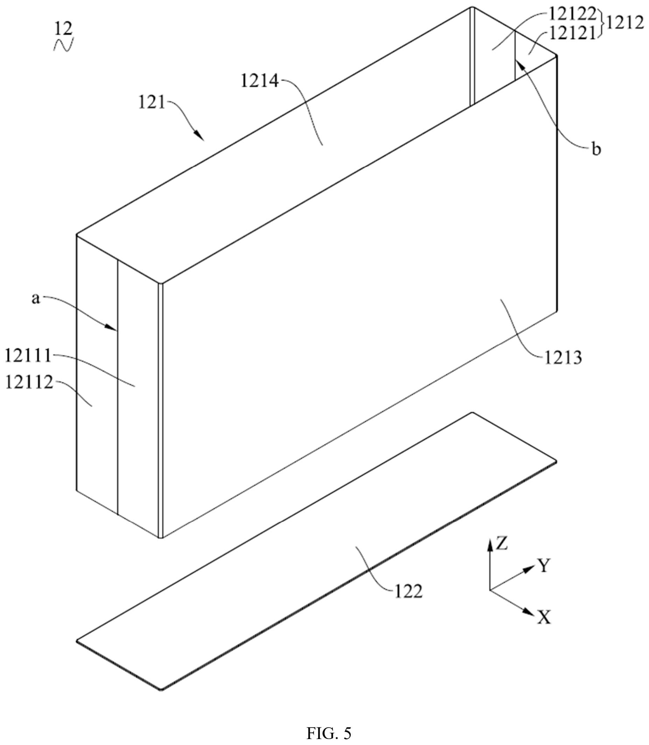

At least part of the housing body 121 is welded as follows:
In some embodiments, referring to FIGs. 4 and 5 together, the first side wall 1211 includes a first sub-wall 12111 and a second sub-wall 12112. The first sub-wall 12111 and the second sub-wall 12112 are sequentially arranged in the third direction X and welded.

As shown in FIGs. 4 and 5, the first sub-wall 12111 and the second sub-wall 12112 are welded to form a first welding bead a.

In addition, an end of the first sub-wall 12111 distal to the second sub-wall 12112 in the third direction X is integrally connected or separably connected to the third side wall 1213, and the first sub-wall 12111 and the third side wall 1213 are bent relative to each other. An end of the second sub-wall 12112 distal to the first sub-wall 12111 in the third direction X is integrally connected or separably connected to the fourth side wall 1214, and the second sub-wall 12112 and the fourth side wall 1214 are bent relative to each other.

In some embodiments, referring to FIG. 5, the second side wall 1212 includes a third sub-wall 12121 and a fourth sub-wall 12122. The third sub-wall 12121 and the fourth sub-wall 12122 are sequentially arranged in the third direction X and welded.

As shown in FIG. 5, the third sub-wall 12121 and the fourth sub-wall 12122 are welded to form a second welding bead b.

In addition, an end of the third sub-wall 12121 distal to the fourth sub-wall 12122 in the third direction X is integrally connected or separably connected to the third side wall 1213, and the third sub-wall 12121 and the third side wall 1213 are bent relative to each other. An end of the fourth sub-wall 12122 distal to the third sub-wall 12121 in the third direction X is integrally connected or separably connected to the fourth side wall 1214, and the fourth sub-wall 12122 and the fourth side wall 1214 are bent relative to each other.

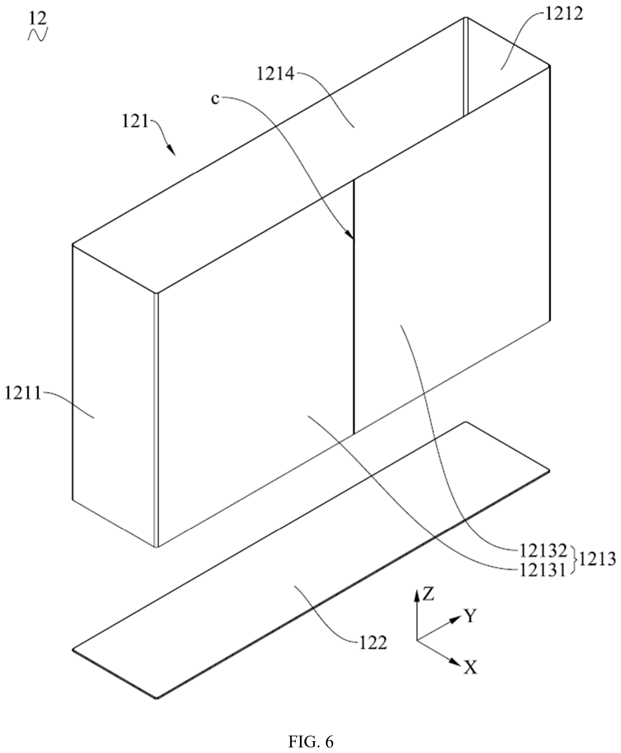

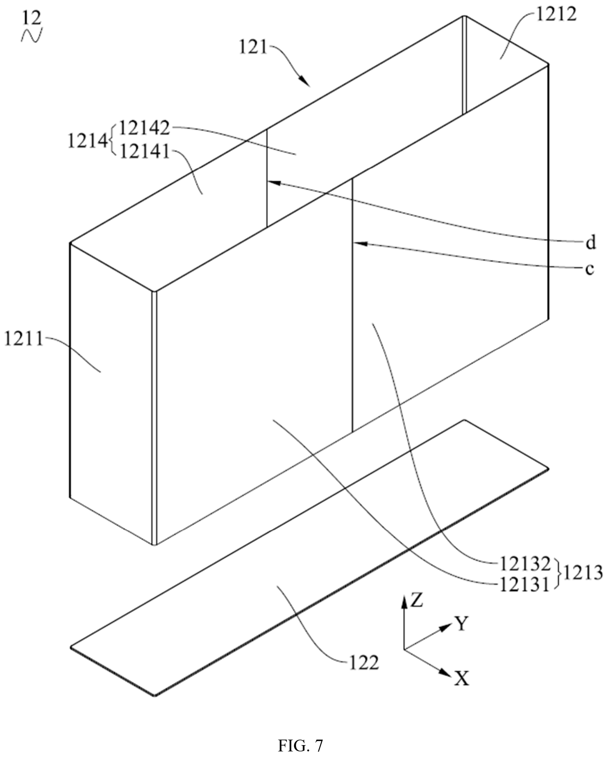

In some embodiments, referring to FIGs. 6 and 7 together, the third side wall 1213 includes a fifth sub-wall 12131 and a sixth sub-wall 12132. The fifth sub-wall 12131 and the sixth sub-wall 12132 are sequentially arranged in the second direction Y and welded.

As shown in FIGs. 6 and 7, the fifth sub-wall 12131 and the sixth sub-wall 12132 are welded to form a third welding bead c.

In addition, an end of the fifth sub-wall 12131 distal to the sixth sub-wall 12132 in the second direction Y is integrally connected or separably connected to the first side wall 1211, and the fifth sub-wall 12131 and the first side wall 1211 are bent relative to each other. An end of the sixth sub-wall 12132 distal to the fifth sub-wall 12131 in the second direction Y is integrally connected or separably connected to the second side wall 1212, and the sixth sub-wall 12132 and the second side wall 1212 are bent relative to each other.

In some embodiments, referring to FIG. 7, the fourth side wall 1214 includes a seventh sub-wall 12141 and an eighth sub-wall 12142. The seventh sub-wall 12141 and the eighth sub-wall 12142 are sequentially arranged in the second direction Y and welded.

As shown in FIG. 7, the seventh sub-wall 12141 and the eighth sub-wall 12142 are welded to form a fourth welding bead d.

In addition, an end of the seventh sub-wall 12141 distal to the eighth sub-wall 12142 in the second direction Y is integrally connected or separably connected to the first side wall 1211, and the seventh sub-wall 12141 and the first side wall 1211 are bent relative to each other. An end of the eighth sub-wall 12142 distal to the seventh sub-wall 12141 in the second direction Y is integrally connected or separably connected to the second side wall 1212, and the eighth sub-wall 12142 and the second side wall 1212 are bent relative to each other.

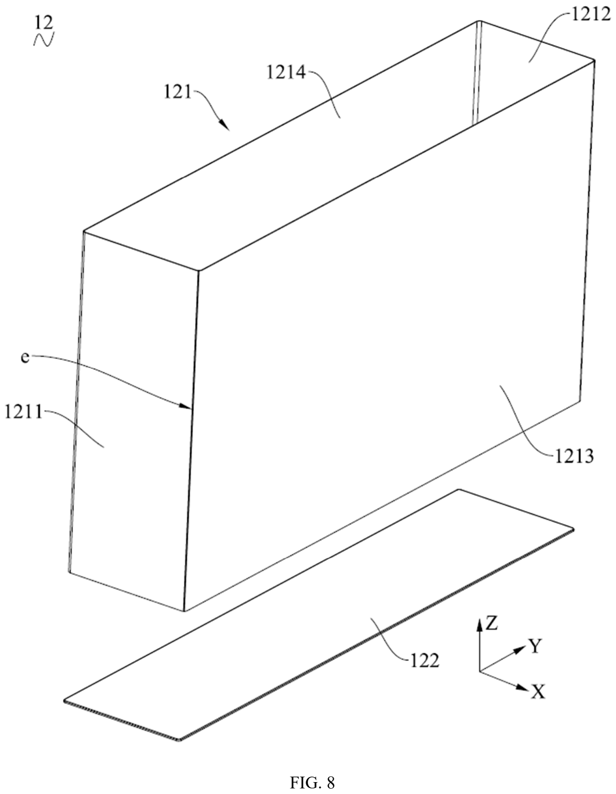

In some embodiments, referring to FIGs. 8 to 11 together, the first side wall 1211 is welded to the third side wall 1213.

As shown in FIGs. 8 to 11, the first side wall 1211 and the third side wall 1213 are bent relative to each other, and are welded to form a fifth welding bead e.

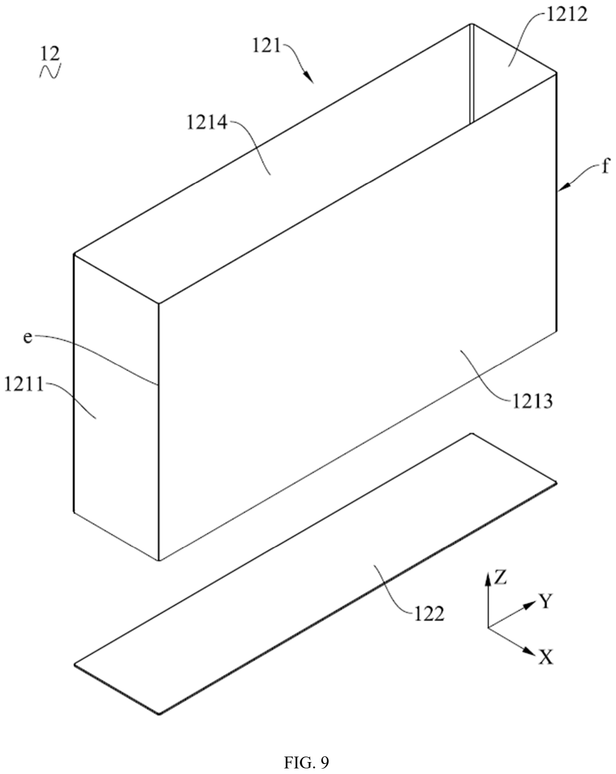

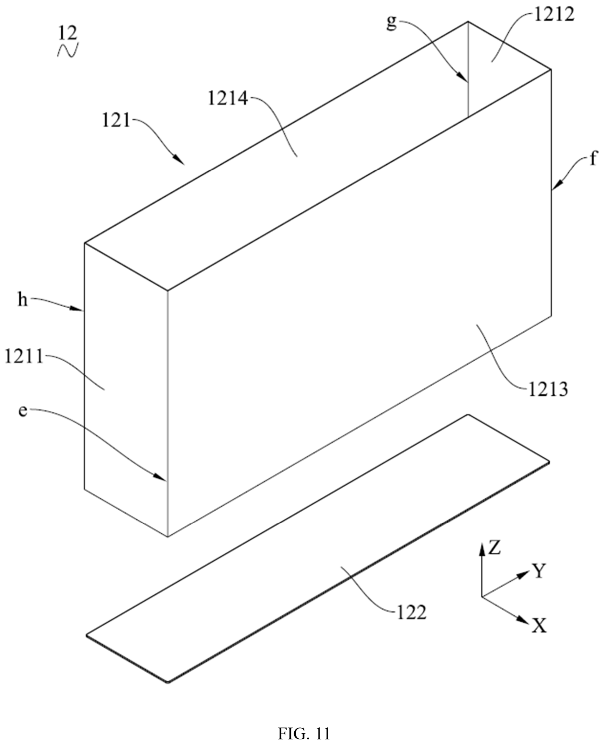

In some embodiments, referring to FIGs. 9 and 11 together, the second side wall 1212 is welded to the third side wall 1213.

As shown in FIGs. 9 and 11, the second side wall 1212 and the third side wall 1213 are bent relative to each other, and are welded to form a sixth welding bead f.

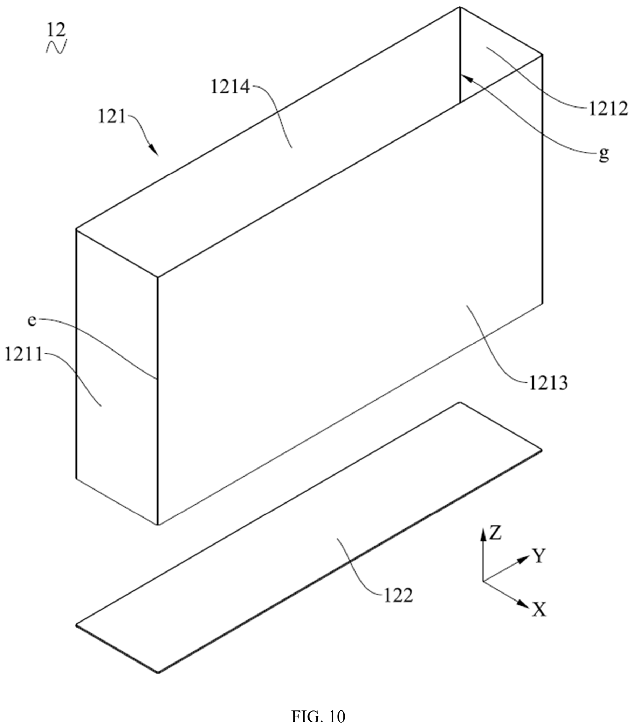

In some embodiments, referring to FIGs. 10 and 11 together, the second side wall 1212 is welded to the fourth side wall 1214.

As shown in FIGs. 10 and 11, the second side wall 1212 and the fourth side wall 1214 are bent relative to each other, and are welded to form a seventh welding bead g.

In some embodiments, referring to FIG. 11, the first side wall 1211 is welded to the fourth side wall 1214.

As shown in FIG. 11, the first side wall 1211 and the fourth side wall 1214 are bent relative to each other, and are welded to form an eighth welding bead h.

On the basis of the above structure, at least one of the first welding bead a, the second welding bead b, the third welding bead c, the fourth welding bead d, the fifth welding bead e, the sixth welding bead f, the seventh welding bead g, and the eighth welding bead h is arranged on the housing body 121.

Due to such an arrangement, the welding process of the housing body 121 is highly flexible, offers a high degree of optionality, and is easy to implement.

In some embodiments, referring to FIG. 4 and other drawings, the first side wall 1211 includes the first sub-wall 12111 and the second sub-wall 12112 described above. The first sub-wall 12111 and the second sub-wall 12112 are sequentially arranged in the third direction X and welded. The first sub-wall 12111, the third side wall 1213, the second side wall 1212, the fourth side wall 1214, and the second sub-wall 12112 are integrally connected in sequence.

The first sub-wall 12111 and the second sub-wall 12112 are welded to form the first welding bead a.

Specifically, the first sub-wall 12111 and the third side wall 1213 are integrally connected and bent relative to each other. The third side wall 1213 and the fourth side wall 1214 are integrally connected and bent relative to each other. The third side wall 1213 and the fourth side wall 1214 are integrally connected and bent relative to each other. The fourth sub-wall 1214 and the second sub-wall 12112 are integrally connected and bent relative to each other.

By integrally forming four bends and then performing one welding operation, the housing body 121 can be obtained.

Alternatively, in some other embodiments, referring to FIG. 8 and other drawings, the first side wall 1211 is welded to the third side wall 1213, and the third side wall 1213, the second side wall 1212, the fourth side wall 1214, and the first side wall 1211 are integrally connected in sequence.

Specifically, as shown in FIG. 8, the first side wall 1211 and the third side wall 1213 are bent relative to each other, and are welded to form the fifth welding bead e. The third side wall 1213 and the fourth side wall 1214 are integrally connected and bent relative to each other. The third side wall 1213 and the fourth side wall 1214 are integrally connected and bent relative to each other. The fourth side wall 1214 and the first side wall 1211 are integrally connected and bent relative to each other.

By integrally forming three bends and then performing one welding operation, the housing body 121 can be obtained.

By adopting the above technical solutions, a plurality of bends are integrally formed, and then one welding operation is performed to obtain the housing body 121. In this way, the forming process of the housing body 121 is very simple and easy to implement.

In some embodiments, referring to FIGs. 4 to 11 together and other drawings, the wall area of the first side wall 1211 is less than the wall area of the third side wall 1213.

The wall area of the first side wall 1211 is the area of any surface of the first side wall 1211 in the second direction Y. The wall area of the third side wall 1213 is the area of any surface of the third side wall 1213 in the third direction X.

By arranging the wall area of the first side wall 1211 to be less than the wall area of the third side wall 1213, the third side wall 1213 is a large surface of the battery 100 cell relative to the first side wall 1211.

By arranging the first welding bead a between the first sub-wall 12111 and the second sub-wall 12112 of the first side wall 1211, compared with arranging the third welding bead c between the fifth sub-wall 12131 and the sixth sub-wall 12132 of the third side wall 1213, the third side wall 1213 can better resist the expansion of the large surface of the electrode assembly 11, thereby enabling the battery 100 cell to have high reliability.

In some embodiments, the wall area of the first side wall 1211 is substantially the same as the wall area of the second side wall 1212, and the wall area of the third side wall 1213 is substantially the same as the wall area of the fourth side wall 1214. In this way, large surfaces of the battery 100 cell are located on the third side wall 1213 and the fourth side wall 1214.

It can be understood that in other embodiments, the wall area of the first side wall 1211 may be the same as the wall area of the third side wall 1213, or the wall area of the first side wall 1211 may be greater than the wall area of the third side wall 1213.

In some embodiments, referring to FIG. 5 and other drawings, the first side wall 1211 includes the first sub-wall 12111 and the second sub-wall 12112 described above. The first sub-wall 12111 and the second sub-wall 12112 are sequentially arranged in the third direction X and welded. The second side wall 1212 includes the third sub-wall 12121 and the fourth sub-wall 12122 described above. The third sub-wall 12121 and the fourth sub-wall 12122 are sequentially arranged in the third direction X and welded. The first sub-wall 12111, the third side wall 1213, and the third sub-wall 12121 are integrally connected in sequence. The fourth sub-wall 12122, the fourth side wall 1214, and the second sub-wall 12112 are sequentially connected.

Specifically, as shown in FIG. 5, the first sub-wall 12111 and the second sub-wall 12112 are welded to form the first welding bead a, and the third sub-wall 12121 and the fourth sub-wall 12122 are welded to form the second welding bead b.

The first sub-wall 12111 and the third side wall 1213 are bent relative to each other and integrally connected. The third side wall 1213 and the third sub-wall 12121 are bent relative to each other and integrally connected. The fourth sub-wall 12122 and the fourth side wall 1214 are bent relative to each other and integrally connected. The fourth side wall 1214 and the second sub-wall 12112 are bent relative to each other and integrally connected.

By providing two components and integrally forming two bends on each component, and then performing two welding operations on the two components, the housing body 121 can be obtained. In this way, the forming process of the housing body 121 is very simple and easy to implement.

Alternatively, in some other embodiments, referring to FIG. 9 and other drawings, the third side wall 1213 is welded to the first side wall 1211 and the second side wall 1212 separately, and the first side wall 1211, the fourth sub-wall 12122, and the second side wall 1212 are integrally connected in sequence.

Specifically, as shown in FIG. 9, the third side wall 1213 and the first side wall 1211 are bent relative to each other, and are welded to form the fifth welding bead e. The third side wall 1213 and the second side wall 1212 are bent relative to each other, and are welded to form the sixth welding bead f.

The first side wall 1211 and the fourth side wall 1214 are bent relative to each other and integrally connected. The fourth side wall 1214 and the second side wall 1212 are bent relative to each other and integrally connected.

By providing two components with two bends formed on one of the components, and then performing two welding operations on the two components, the housing body 121 can be obtained. In this way, the forming process of the housing body 121 is very simple and easy to implement.

Alternatively, in still some other embodiments, referring to FIG. 10 and other drawings, the first side wall 1211 is welded to the third side wall 1213, the second side wall 1212 is welded to the fourth side wall 1214, the first side wall 1211 is integrally connected to the fourth side wall 1214, and the second side wall 1212 is integrally connected to the third side wall 1213.

Specifically, as shown in FIG. 10, the first side wall 1211 and the third side wall 1213 are bent relative to each other, and are welded to form the fifth welding bead e. The second side wall 1212 and the fourth side wall 1214 are bent relative to each other, and are welded to form the seventh welding bead g.

The first side wall 1211 and the fourth side wall 1214 are bent relative to each other and integrally connected. The second sub-wall 1212 and the third side wall 1213 are bent relative to each other and integrally connected.

By providing two components and integrally forming one bend on each component, and then performing two welding operations on the two components, the housing body 121 can be obtained. In this way, the forming process of the housing body 121 is very simple and easy to implement.

By providing two integrally formed components and then performing two welding operations on the two components, the housing body 121 can be obtained. In this way, the forming process of the housing body 121 is very simple and easy to implement.

In some embodiments, referring to FIG. 11 and other drawings, the first side wall 1211, the third side wall 1213, the second side wall 1212, and the fourth side wall 1214 are sequentially welded, and the end of the fourth side wall 1214 distal to the second side wall 1212 is welded to the first side wall 1211.

The first side wall 1211 and the third side wall 1213 are bent relative to each other, and are welded to form the fifth welding bead e. The third side wall 1213 and the second side wall 1212 are bent relative to each other, and are welded to form the sixth welding bead f. The second side wall 1212 and the fourth side wall 1214 are bent relative to each other, and are welded to form the seventh welding bead g. The fourth side wall 1214 and the first side wall 1211 are bent relative to each other, and are welded to form the eighth welding bead h.

By adopting the above technical solutions, the first side wall 1211, the second side wall 1212, the third side wall 1213, and the fourth side wall 1214 can be formed into the housing body 121 by four welding operations. In this way, the forming process of the housing body 121 is very simple and easy to implement.

In some embodiments, referring to FIG. 3 and other drawings, the battery 100 cell further includes an end cover 13. The end cover 13 is arranged on the housing 12. The electrode assembly 11 is accommodated in a space enclosed by the housing 12 and the end cover 13.

Specifically, the end cover 13 is arranged at an end of the housing body 121 distal to the housing bottom 122 in the first direction Z, such that the end cover 13, the housing body 121, and the housing bottom 122 can enclose a space for accommodating the electrode assembly 11.

Due to such an arrangement, the end cover 13 and the housing 12 can form the internal environment of the battery 100 cell.

Referring to FIG. 2 and other drawings, the battery 100 according to the embodiments of the present application includes a battery 100 cell. The battery 100 cell in the embodiment is the same as the battery 100 cell in the previous embodiment. Reference may be made to the relevant descriptions of the battery 100 cell in the previous embodiment for details, which will not be repeated here.

By adopting the battery 100 cell referred to above, the battery 100 according to the embodiments of the present application can reduce the proportion of the housing 12 in the battery 100 cell, thereby enabling the battery 100 cell to have a high energy density and increasing the energy density of the battery 100.

Referring to FIG. 1, the electric device according to the embodiments of the present application includes a battery 100 cell or a battery 100. The battery 100 cell and the battery 100 in the embodiment are the same as the battery 100 cell and the battery 100 in the previous embodiment. Reference may be made to the relevant descriptions of the battery 100 cell and the battery 100 in the previous embodiment for details, which will not be repeated here.

By adopting the battery 100 cell or the battery 100 referred to above, the electric device according to the embodiments of the present application can increase the energy density of the battery 100.

As one embodiment of the present application, as shown in FIGs. 3 and 4, the battery 100 cell includes an electrode assembly 11, a housing 12, and an end cover 13. The electrode assembly 11 is arranged in an internal environment defined by the end cover 13 and the housing 12. The housing 12 is a steel housing. The housing 12 includes a housing body 121 and a housing bottom 122. The housing body 121 is provided in a penetrating manner in the first direction Z, and the end cover 13 and the housing bottom 122 are arranged at two opposite ends of the housing body 121 in the first direction Z, respectively. The housing body 121 includes a first side wall 1211, a second side wall 1212, a third side wall 1213, and a fourth side wall 1214. The first side wall 1211 and the second side wall 1212 are oppositely arranged in the second direction Y, and the third side wall 1213 and the fourth side wall 1214 are oppositely arranged in the third direction X. The first side wall 1211 includes the first sub-wall 12111 and the second sub-wall 12112. The first sub-wall 12111 and the second sub-wall 12112 are sequentially arranged in the third direction X, and are welded to form the first welding bead a. The first sub-wall 12111, the third side wall 1213, the second side wall 1212, the fourth side wall 1214, and the second sub-wall 12112 are integrally connected in sequence. In addition, the first sub-wall 12111 and the third side wall 1213 are bent relative to each other, the third side wall 1213 and the second side wall 1212 are bent relative to each other, the second side wall 1212 and the fourth side wall 1214 are bent relative to each other, and the fourth side wall 1214 and the second sub-wall 12112 are bent relative to each other. The ends of the first sub-wall 12111, the second sub-wall 12112, the second side wall 1212, the third side wall 1213, and the fourth side wall 1214 distal to the end cover 13 in the first direction Z are welded to the housing bottom 122.

The above are only preferred embodiments of the present application, and are not intended to limit the present application. Any modification, equivalent substitution, improvement, and the like made within the spirit and principle of the present application shall all fall within the protection scope of the present application.

## Claims

1. A battery cell (10), comprising:
a housing (12), at least part of the housing being a steel housing, wherein the housing (12) comprises a housing body (121) and a housing bottom (122), and the housing bottom (122) is arranged at an end of the housing body (121) in a first direction (Z), and is separably connected or integrally connected to the housing body (121); and
an electrode assembly (11), at least part of the electrode assembly being arranged in a space enclosed by the housing body (121) and the housing bottom (122), wherein
the housing body (121) comprises a first side wall (1211) and a second side wall (1212) oppositely arranged in a second direction (Y), and a third side wall (1213) and a fourth side wall (1214) oppositely arranged in a third direction (X); the first side wall (1211), the third side wall (1213), the second side wall (1212), and the fourth side wall (1214) are sequentially connected in a bending manner, and an end of the fourth side wall (1214) distal to the second side wall (1212) is connected to the first side wall (1211); the housing bottom (122) is arranged at ends of the first side wall (1211), the second side wall (1212), the third side wall (1213), and the fourth side wall (1214) in the first direction (Z); the first direction (Z), the second direction (Y), and the third direction (X) are arranged to intersect with each other,
wherein the first side wall (1211) comprises a first sub-wall (12111) and a second sub-wall (12112) sequentially arranged in the third direction (X), and the first sub-wall (12111) is welded to the second sub-wall (12112);
and/or the second side wall (1212) comprises a third sub-wall (12121) and a fourth sub-wall (12122) sequentially arranged in the third direction (X), and the third sub-wall (12121) is welded to the fourth sub-wall (12122);
and/or the third side wall (1213) comprises a fifth sub-wall (12131) and a sixth sub-wall (12132) sequentially arranged in the second direction (Y), and the fifth sub-wall (12131) is welded to the sixth sub-wall (12132);
and/or the fourth side wall (1214) comprises a seventh sub-wall (12141) and an eighth sub-wall (12142) sequentially arranged in the second direction (Y), and the seventh sub-wall (12141) is welded to the eighth sub-wall (12142);
and/or the first side wall (1211) is welded to the third side wall (1213);
and/or the first side wall (1211) is welded to the fourth side wall (1214);
and/or the second side wall (1212) is welded to the third side wall (1213);
and/or the second side wall (1212) is welded to the fourth side wall (1214).

2. The battery cell (10) according to claim 1, wherein a wall thickness of the at least part of the housing (12) is less than or equal to 0.2 mm.

3. The battery cell (10) according to claim 1 or 2, wherein the wall thickness of the at least part of the housing (12) is less than or equal to 0.075 mm.

4. The battery cell (10) according to any one of claims 1 to 3, wherein a peripheral edge of the end of the housing body (121) facing the housing bottom (122) in the first direction (Z) is welded to the housing bottom (122).

5. The battery cell (10) according to any one of claims 1 to 4, wherein the first side wall (1211) is welded to the third side wall (1213), and the third side wall (1213), the second side wall (1212), the fourth side wall (1214), and the first side wall (1211) are integrally connected in sequence;
or, the first side wall (1211) comprises the first sub-wall (12111) and the second sub-wall (12112) sequentially arranged in the third direction (X) and welded, and the first sub-wall (12111), the third side wall (1213), the second side wall (1212), the fourth side wall (1214), and the second sub-wall (12112) are integrally connected in sequence.

6. The battery cell (10) according to any one of claims 1 to 5, wherein a wall area of the first side wall (1211) is less than a wall area of the third side wall (1213).

7. The battery cell (10) according to any one of claims 1 to 6, wherein the first side wall (1211) comprises the first sub-wall (12111) and the second sub-wall (12112) sequentially arranged in the third direction (X) and welded, the second side wall (1212) comprises the third sub-wall (12121) and the fourth sub-wall (12122) sequentially arranged in the third direction (X) and welded, the first sub-wall (12111), the third side wall (1213), and the third sub-wall (12121) are integrally connected in sequence, and the fourth sub-wall (12122), the fourth side wall (1214), and the second sub-wall (12112) are sequentially connected;
or, the third side wall (1213) is welded to the first side wall (1211) and the second side wall (1212) separately, and the first side wall (1211), the fourth side wall (1214), and the second side wall (1212) are integrally connected in sequence;
or, the first side wall (1211) is welded to the third side wall (1213), the second side wall (1212) is welded to the fourth side wall (1214), the first side wall (1211) is integrally connected to the fourth side wall (1214), and the second side wall (1212) is integrally connected to the third side wall (1213).

8. The battery cell (10) according to any one of claims 1 to 7, wherein the first side wall (1211), the third side wall (1213), the second side wall (1212), and the fourth side wall (1214) are sequentially welded, and the end of the fourth side wall (1214) distal to the second side wall (1212) is welded to the first side wall (1211).

9. The battery cell (10) according to any one of claims 1 to 8, wherein the battery cell (10) further comprises an end cover (13) arranged on the housing (12), and the electrode assembly (11) is accommodated in a space enclosed by the housing (12) and the end cover (13).

10. A battery (100), comprising a plurality of battery cells (10) according to any one of claims 1 to 9.

11. An electric device, comprising the battery cell (10) according to any one of claims 1 to 9, or the battery (100) according to claim 10.
